# EUROPÄISCHE PATENTSCHRIFT

(11) **EP 1 424 509 B1**
(45) Veröffentlichungstag und Bekanntmachung des Hinweises auf die Patenterteilung: **27.02.2008**
(21) Anmeldenummer: 02102662.0
(22) Anmeldetag: 28.11.2002
(51) Int. Cl.: F16H 3/093, F16H 57/02

(54) **Verwendung eines Zahnradgetriebes in zwei Getriebevarianten**
Use of a gear transmission in two variants
Utilisation d'une transmission par engrenages dans deux variantes

(43) Veröffentlichungstag der Anmeldung: 02.06.2004
(73) Patentinhaber: Getrag Ford Transmissions GmbH, 50725 Köln (DE)
(72) Erfinder: Kueck, Rainer, 50735 Köln (DE)
(74) Vertreter: Drömer, Hans-Carsten

(56) Entgegenhaltungen:
- EP-A- 1 067 312
- EP-A- 1 245 863
- WO-A-03/019043
- GB-A- 2 074 669
- GB-A- 2 103 316
- US-A- 5 311 789

## Beschreibung

Die Erfindung betrifft die Verwendung eines Zahnradwechselgetriebes für Kraftfahrzeuge in zumindest zwei Getriebevarianten gemäß dem Oberbegriff des Anspruches 1.

Aus der EP 0 046 373 ist ein Getriebekonzept für ein 6-Gang-Vorgelege-Wechselgetriebe für Kraftfahrzeuge gemäß dem Oberbegriff des Patentanspruches 1 bekannt, das eine Eingangswelle und zwei parallel hierzu angeordnete Vorgelegewellen aufweist, die jeweils mit einem Ritzel versehen sind, das in Eingriff mit einem Endabtriebszahnrad steht. Auf der Eingangswelle sind Festräder angeordnet, die in ständigem Eingriff mit Losrädern auf den Vorgelegewellen stehen benachbart denen einfache bzw. doppelte Synchronisiereinheiten vorgesehen sind, über die sie mit ihren entsprechenden Wellen treibend verbindbar sind. Dabei bilden die Losräder von 3. und 5. Gang eine Abhängigkeit, indem sie mit dem gleichen Festrad auf der Eingangswelle kämmen, und die Losräder von 4. und 6. Gang bilden eine weitere Abhängigkeit, indem sie mit einem weiteren Festrad auf der Eingangswelle gemeinsam kämmen.

Ein ähnliches 6-Gang-Getriebe mit einer Anordnung der Getriebezahnräder ist aus der EP 1 067 312, das als nächstliegender Stand der Technik angesehen wird, bekannt. Es umfaßt eine Getriebeeingangswelle, zwei Zwischenwellen, eine Getriebeabtriebswelle sowie darauf angeordnete Ganzahnräder und Schiebemuffen. Die Losräder für den ersten bis vierten Gang sind auf der ersten Zwischenwelle schaltbar angeordnet, die Losräder für den fünften, sechsten und den Rückwärts-Gang sind auf der zweiten Zwischenwelle schaltbar angeordnet. Am Ende der Eingangswelle befindet sich nur eine Abhängigkeit zwischen 4. und 6. Gang, indem die Losräder für den 4. und 6. Gang mit einem gemeinsamen Festrad kämmen.

Während Fahrversuchen mit Kraftfahrzeugen, insbesondere Personenkraftwagen, hat der Erfinder erkannt, das derartige Getriebe mit einer Abhängigkeit zwischen 4. und 6. Gang bzw. mit zwei Abhängigkeiten zwischen 3. und 5. bzw. 4. und 6. Gang nicht für alle Verbrennungsmotoren eine optimale Abstimmung zwischen den unterschiedlichen Drehmomentkurven der Verbrennungsmotoren und den gewünschten Abstufungen der Übersetzungsverhältnisse ermöglicht.

Aufgabe der Erfindung ist es demnach, das vorhandene Getriebekonzept so weiterzuentwickeln, daß für verschiedene Getriebevarianten eines Zahnradwechselgetriebes verschiedene Getriebeabstufungen möglich sind, wobei die Getriebevarianten nur geringfügige konstruktive Unterschied aufweisen sollen.

Erfindungsgemäß wird die Aufgabe gelöst mit den Merkmalen des Anspruches 1. Indem für die verschiedenen Getriebevarianten die Abhängigkeit an der gleichen Position auf der Eingangswelle und der Zwischenwelle verbleibt, die Abhängigkeit jedoch durch unterschiedliche Gänge gebildet wird, indem die gleichen Losräder und die gleichen Festräder unterschiedliche Übersetzungen erhalten, kann auf einfache Weise das Getriebe unter Beibehaltung einer Abhängigkeit an verschiedene Abstufungen der Übersetzungsverhältnisse angepasst werden.

Eine besonders vorteilhaft Ausgestaltung der Erfindung ergibt sich, wenn eine erste Getriebevariante eine Abhängigkeit zwischen 4. und 6. Gang aufweist, und eine zweite Getriebevariante eine Abhängigkeit zwischen 3. und 5. Gang aufweist, indem die an der Abhängigkeit beteiligten beiden Losräder und das Festrad bei der ersten Getriebevariante die Übersetzungen für den 4. und 6. Gang und bei der zweiten Getriebevariante für den 3. und 5. Gang aufweisen. Dabei können beide Getriebevarianten sechs Vorwärtsgänge aufweisen, es sind aber auch möglich, das eine oder beide Getriebevarianten noch mehr Vorwärtsgänge aufweisen. Vorteilhafterweise werden diese Getriebevarianten verwendet bei Verbrennungsmotor in Kraftfahrzeugen, wobei die Getriebevariante mit der Abhängigkeit zwischen 4. und 6. Gang als Getriebe für einen Dieselmotor, und die andere Getriebevariante mit der Abhängigkeit zwischen 3. und 5. Gang als Getriebe für einen Benzinmotor vorgesehen ist.

Aufgrund des Drehmomentverlaufes eines Dieselmotors kann eine sehr gute Getriebeabstufung erreicht werden, wenn die Abhängigkeit zwischen 4. und 6. Gang besteht. Bei einem Benzinmotor, der in der Regel eine steilere Drehmomentkurve aufweist, ist die Anpassung der Getriebeabstufung besser erreichbar, wenn die Abhängigkeit zwischen 3. und 5 Gang besteht. Durch die erfinderische Ausführung kann das prinzipiell gleiche Getriebe durch einfachen Austausch der Fest- und Losräder für die Gänge 3 bis 6 sowohl an einen Dieselmotor als auch an einen Benzinmotor angepasst werden.

Vorteilhaft sind auf der Eingangswelle die Festräder für die oberen Gänge nicht mit der Eingangswelle aus einem Stück gefertigt, sondern werden nachträglich durch ein geeignetes Verfahren mit der Einganswelle drehfest verbunden. Die Verbindung kann erfolgen mittels geeigneten Form- oder Kraftschlusses wie Keilverzahnung, Vieleckprofile, Laserschweißen oder durch Aufschrumpfen oder Aufpressen der Zahnräder auf die Eingangswelle. Auf diese Weise basieren alle Eingangswellen auf einer Grundwelle, die nur die Festräder für die unteren Gänge (1 und 2) aufweist, während die Festräder für die oberen Gänge (ab 3. Gang) je nach Getriebevariante in unterschiedlicher Reihenfolge auf den Eingangswellen befestigt sind.

Konstruktiv gesehen ändern sich dabei die ausgetauschten Zahnräder nicht, da sie zumindest teilweise lediglich eine neue Verzahnung mit unterschiedlichen Wälzkreisdurchmessern erhalten, die prinzipiellen Abmessungen jedoch, wie Bohrungsdurchmesser, Baulänge, Lage und Befestigung auf den Wellen, Schaltverzahnungen usw. sich nicht ändern. Alle anderen wesentlichen Bauteile des Getriebes, wie Wellen, Gehäuse, Synchronisiereinrichtungen sind bei beiden Getriebevarianten überwiegend identisch. Lediglich die Betätigungsvorrichtung bei einem manuell geschalteten Getriebe muß u. U. für die getauschten Zahnräder umgelenkt werden, damit z. B. das übliche H-Schaltschema für den Fahrer beibehalten werden kann. Dies entfällt jedoch auch, wenn das Getriebe automatisiert ist und mittels Schaltaktuatoren geschaltet wird.

Weitere vorteilhafte Ausgestaltungen der Erfindung können den folgenden Zeichnungen entnommen werden. Es zeigen:
- Fig. 1: eine schematisierte Darstellung eines erfindungsgemäßen Getriebes mit einer 4/6 Abhängigkeit; und
- Fig. 2: eine schematisierte Darstellung eines erfindungsgemäßen Getriebes mit einer 3/5 Abhängigkeit;

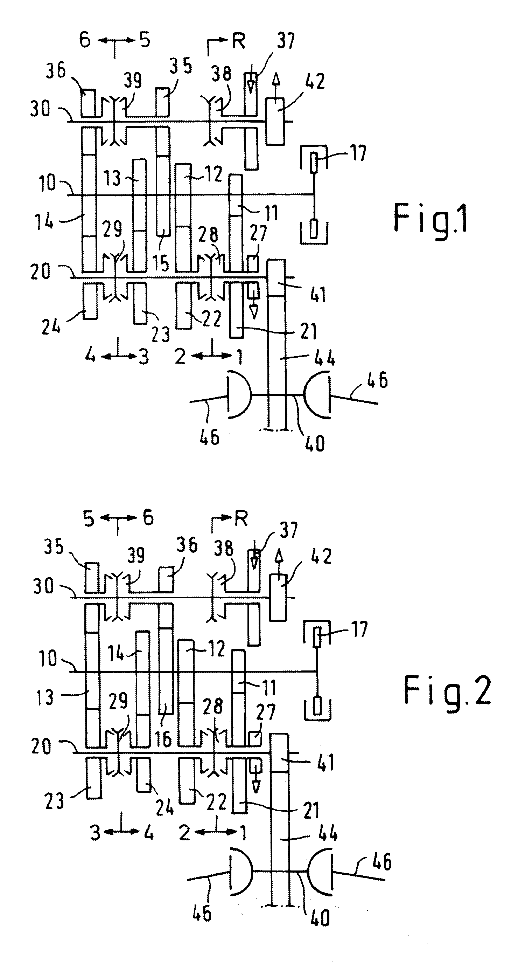

In Fig. 1 und 2 sind zwei erfindungsgemäße Getriebe mit jeweils 6 Gängen schematisch dargestellt, wobei Fig. 1 die Getriebevariante mit einer 4/6 Abhängigkeit und Fig. 2 die Getriebevariante mit einer 3/5 Abhängigkeit darstellt. Die Eingangswelle 10 ist über die Kupplung 17 mit dem nicht dargestellten Motor verbunden. Auf der Eingangswelle 10 sind die Festräder 11 bis 16 für die Gänge 1 bis 6 drehstarr angeordnet. Auf der ersten Zwischenwelle 20 befinden sich die Losräder 21 bis 24 für die Gänge 1 bis 4, die über die Schaltvorrichtungen 28 und 29 drehstarr mit der ersten Zwischenwelle 20 schaltbar sind. Auf der zweiten Zwischenwelle 30 befinden sich die Losräder 35 und 36 für die Gänge 5 und 6 sowie das Losrad 37 für den Rückwärtsgang, wobei alle Losräder ebenfalls über die Schaltvorrichtungen 38 und 39 drehstarr mit der zweiten Zwischenwelle 30 schaltbar sind.

In Fig. 1 ist motorseitig gesehen die Anordnung der Festräder auf der Eingangswelle 11 wie folgt: Festrad 11, welches mit Losrad 21 für den 1. Gang kämmt, dann Festrad 12, welches mit Losrad 22 für den 2. Gang kämmt, dann Festrad 15, welches mit Losrad 35 für den 5. Gang kämmt, dann Festrad 13, welches mit dem Losrad 23 für den 3. Gang kämmt und am Ende der Eingangswelle das Festrad 14, das sowohl mit dem Losrad 24 für den 4. Gang als auch mit dem Losrad 36 für den 6. Gang kämmt. Aus dieser Anordnung der Festräder ergeben sich Schaltpaare der Losräder, die jeweils über eine gemeinsame Schaltvorrichtung geschaltet werden. Losrad 21 und 22 für den 1. und 2. Gang sind über die Schaltvorrichtung 28 drehstarr mit der ersten Zwischenwelle 20 verbindbar, Losrad 23 und 24 für den 3. und 4. Gang sind über die Schaltvorrichtung 29 drehstarr mit der ersten Zwischenwelle 20 verbindbar und Losrad 35 und 36 für den 5. und 6. Gang sind über die Schaltvorrichtung 39 drehstarr mit der zweiten Zwischenwelle 30 verbindbar.

Erste und zweite Zwischenwelle 20 und 30 weisen am motorseitigen Ende drehstarr angeordnete Abtriebszahnräder 41 und 42 auf, die beide mit einem Ringzahnrad 44 der Abtriebswelle 40, welche die Antriebskraft über die Achsabtriebswellen 46 auf die Räder leitet.

Für den Rückwärtsgang ist auf der ersten Zwischenwelle 20 ein Zwischenzahnrad 27 lose angeordnet, welches drehstarr mit dem Loszahnrad 21 des 1. Ganges verbunden ist. Dadurch befindet sich das Zwischenzahnrad 27 indirekt über das Losrad 21 ständig im Eingriff mit der Eingangswelle 10. Das Zwischenzahnrad 27 kämmt mit dem Losrad 37 für den Rückwärtsgang, welches auf der zweiten Zwischenwelle 30 angeordnet ist und über die Schaltvorrichtung 38 mit dieser drehstarr verbindbar ist. Durch diese Anordnung wird die Funktion der für den Rückwärtsgang notwendigen Zwischenwelle durch die erste Zwischenwelle 20 erfüllt, indem die beiden verbundenen Zahnräder, Losrad 21 und Zwischenzahnrad 27, im Rückwärtsgang lose auf der ersten Zwischenwelle laufen.

Fig. 2 unterscheidet sich in der Anordnung der Zahnräder nur bezüglich der oberen Gänge ab dem 3. Gang, alle anderen Komponenten, insbesondere auch die Schaltvorrichtungen, ändern sich nicht. Motorseitig gesehen ergibt sich folgende Anordnung: Festrad 11, welches mit Losrad 21 für den 1. Gang kämmt, dann Festrad 12, welches mit Losrad 22 für den 2. Gang kämmt, dann Festrad 16, welches mit Losrad 36 für den 6. Gang kämmt, dann Festrad 14, welches mit dem Losrad 24 für den 4. Gang kämmt und am Ende der Eingangswelle das Festrad 13, das sowohl mit dem Losrad 23 für den 3. Gang als auch mit dem Losrad 35 für den 5. Gang kämmt.

Dabei ist die Lage der Abhängigkeit nicht auf das Ende der Eingangswelle 10 begrenzt; vielmehr kann die Abhängigkeit an jeder Stelle auf der Eingangswelle, wie in EP 0 046 373 bereits gezeigt, liegen. Wesentlicher Vorteil der Erfindung ist die leicht Anpassung an verschiedene erforderliche Getriebeabstufungen, ohne prinzipielle konstruktive Änderung des Getriebes.

## Patentansprüche

1. Verwendung eines Zahnradwechselgetriebes für Kraftfahrzeuge in zumindest zwei Getriebevarianten mit unterschiedlichen Abstufungsverhältnissen, wobei des Zahnradwechselgetriebe
- eine Eingangswelle (10) mit mehreren Festrädern (11, 12, 13, 14, 15, 16),
- eine ersten Zwischenwelle (20), auf der zumindest zwei Losräder (21, 22, 23, 24) für Vorwärtsgänge und ein drehfestes Abtriebszahnrad (41) angeordnet sind,
- eine zweite Zwischenwelle (30), auf der zumindest zwei weitere Losräder (35, 36) für Vorwärtsgänge und ein drehstarr verbundenes Abtriebszahnrad (42) angeordnet ist,
- und eine Getriebeausgangswelle mit einem Zahnrad (44), welches mit den beiden Abtriebszahnrädern (41, 42) im Zahneingriff steht,
aufweist, die Losräder auf den Zwischenwellen mit zugeordneten Festrädern auf der Eingangswelle kämmen, zumindest zwei Losräder 24, 26) eine Abhängigkeit bilden, indem sie mit dem gleichen Festrad (14) kämmen, und die Losräder durch geeignete Schaltvorrichtungen (28, 29, 39) drehfest mit den Zwischenwellen (20, 30) schaltbar sind,
**dadurch gekennzeichnet, daß**
für die verschiedenen Getriebevarianten die Abhängigkeit an der gleichen Position auf der Eingangswelle (10) und der Zwischenwelle (20, 30) verbleibt, die Abhängigkeit jedoch durch unterschiedliche Gänge (3, 4, 5, 6) gebildet wird, indem die gleichen Losräder (23, 24, 35, 36) und die gleichen Festräder (13, 14, 15, 16) unterschiedliche Übersetzungen erhalten.

2. Verwendung nach Anspruch 1,
**dadurch gekennzeichnet, daß**
eine erste Getriebevariante eine Abhängigkeit zwischen 4. und 6. Gang aufweist, und eine zweite Getriebevariante eine Abhängigkeit zwischen 3. und 5. Gang aufweist, indem die an der Abhängigkeit beteiligten beiden Losräder und das Festrad bei der ersten Getriebevariante die Übersetzungen für den 4. und 6. Gang und bei der zweiten Getriebevariante für den 3. und 5. Gang aufweisen.

3. Verwendung nach Anspruch 2,
**dadurch gekennzeichnet, daß**
beide Getriebevarianten sechs Vorwärtsgänge aufweisen.

4. Verwendung der Getriebevarianten aus Anspruch 2 oder 3 in Verbindung mit einem Verbrennungsmotor in Kraftfahrzeugen,
**dadurch gekennzeichnet, daß**
die Getriebevariante mit der Abhängigkeit zwischen 4. und 6. Gang als Getriebe für einen Dieselmotor, und die andere Getriebevariante mit der Abhängigkeit zwischen 3. und 5. Gang als Getriebe für einen Benzinmotor vorgesehen ist.

## Claims

1. Use of a geared transmission for motor vehicles in at least two transmission variants having different transmission ratios, the geared transmission having
- an input shaft (10) with multiple fixed gear wheels (11, 12, 13, 14, 15, 16),
- a first intermediate shaft (20), on which at least two loose gear wheels (21, 22, 23, 24) for forward gears and a rotationally fixed output gear wheel (41) are arranged,
- a second intermediate shaft (30), on which at least two further loose gear wheels (35, 36) for forward gears and a rotationally locked output gear wheel (42) are arranged,
- and a transmission output shaft with a gear wheel (44), which meshes with the two output gear wheels (41, 42),
the loose gear wheels on the intermediate shafts meshing with assigned fixed gear wheels on the input shaft, and at least two loose gear wheels (24, 26) forming a dependent pairing in that they mesh with the same fixed gear wheel (14), it being possible by means of suitable shift devices (28, 29, 39) to shift the loose gear wheels rotationally locked to the intermediate shafts (20, 30),
**characterized in that**
for the different transmission variants the dependent pairing remains at the same position on the input shaft (10) and the intermediate shaft (20, 30), but the dependent pairing is formed by different gears (3, 4, 5, 6), the same loose gear wheels (23, 24, 35, 36) and the same fixed gear wheels (13, 14, 15, 16) being given different gear ratios.

2. Use according to Claim 1,
**characterized in that**
a first transmission variant has a dependent pairing between 4th and 6th gear, and a second transmission variant has a dependent pairing between 3rd and 5th gear, the two loose gear wheels involved in the dependent pairing and the fixed gear wheel having the gear ratios for the 4th and 6th gear in the first transmission variant and the gear ratios for the 3rd and 5th gear in the second transmission variant.

3. Use according to Claim 2,
**characterized in that**
both transmission variants have six forward gears.

4. Use of the transmission variants according to Claim 2 or 3 in conjunction with an internal combustion engine in motor vehicles,
**characterized in that**
the transmission variant with the dependent pairing between 4th and 6th gear is intended as transmission for a diesel engine, and the other transmission variant with the dependent pairing between 3rd and 5th gear is intended as transmission for a petrol engine.

## Revendications

1. Utilisation d'une transmission par engrenages pour véhicules automobiles dans au moins deux variantes de transmission, avec des rapports d'étages différents, dans laquelle la transmission par engrenages présente
- un arbre d'entrée (10) avec plusieurs roues fixes (11, 12, 13, 14, 15, 16),
- un premier arbre intermédiaire (20) sur lequel sont disposées au moins deux roues libres (21, 22, 23, 24) pour des vitesses de marche avant et une roue dentée de sortie fixe en rotation (41),
- un deuxième arbre intermédiaire (30), sur lequel sont disposées au moins deux autres roues libres (35, 36) pour des vitesses de marche avant et une roue dentée de sortie (42) connectée de manière rigide en rotation,
- et un arbre de sortie de transmission avec une roue dentée (44) qui est en engagement denté
avec les deux roues dentées de sortie (41, 42), les roues libres sur les arbres intermédiaires s'engrenant avec des roues fixes associées sur l'arbre d'entrée, au moins deux roues libres (24, 26) étant dépendantes l'une de l'autre du fait qu'elles s'engrènent avec la même roue fixe (14) et les roues libres pouvant être commutées de manière fixe en rotation avec les arbres intermédiaires (20, 30) par des dispositifs de commutation appropriés (28, 29, 39),
**caractérisée en ce que**
pour les différentes variantes de transmission, la dépendance subsiste dans la même position sur l'arbre d'entrée (10) et l'arbre intermédiaire (20, 30), la dépendance étant toutefois créée par des vitesses différentes (3, 4, 5, 6), **en ce que** les mêmes roues libres (23, 24, 35, 36) et les mêmes roues fixes (13, 14, 15, 16) reçoivent des démultiplications différentes.

2. Utilisation selon la revendication 1,
**caractérisée en ce que**
une première variante de transmission présente une dépendance entre la 4e et la 6e vitesse, et une deuxième variante de transmission présente une dépendance entre la 3e et la 5e vitesse, **en ce que** les deux roues libres participant à la dépendance et la roue fixe présentent, dans la première variante de transmission, les démultiplications pour la 4e et la 6e vitesse, et dans la deuxième variante de transmission, les démultiplications pour la 3e et la 5e vitesse.

3. Utilisation selon la revendication 2,
**caractérisée en ce que**
les deux variantes de transmission présentent 6 vitesses de marche avant.

4. Utilisation des variantes de transmission selon la revendication 2 ou 3 en liaison avec un moteur à combustion interne dans des véhicules automobiles,
**caractérisée en ce que**
la variante de transmission avec la dépendance entre la 4e et la 6e vitesse est prévue sous forme de transmission pour un moteur diesel, et l'autre variante de transmission avec la dépendance entre la 3e et la 5e vitesse est prévue sous forme de transmission pour un moteur à essence.
